# EUROPEAN PATENT SPECIFICATION

(11) **EP 2 192 790 B1**
(45) Date of publication and mention of the grant of the patent: **29.08.2012**
(21) Application number: 10156509.1
(22) Date of filing: 07.06.2007
(51) Int. Cl.: H04R 1/10, H04R 1/46

(54) **Ear cup**
Ohrmuschel
Oreillette

(30) Priority: 20.06.2006 SE 0601361
(43) Date of publication of application: 02.06.2010
(62) Divisional of application: 07748207.3
(73) Proprietor: 3M Svenska Aktiebolag, 191 89 Sollentuna (SE)
(72) Inventor: Emilsson, Niklas, S 330 17, Rydaholm (SE)
(74) Representative: Wallengren, Yngvar

(56) References cited:
- EP-A2- 0 465 971
- US-A- 4 087 653

## Description

### TECHNICAL FIELD

The present invention relates to an ear cup with a bone conduction microphone, and comprising a cup, a sealing ring secured to the cup , and a microphone capsule adapted to be disposed between the sealing ring and a wearer's head when the ear cup is worn.

### BACKGROUND ART

Ear cups or headsets of the above-mentioned type are previously known in the art. In them, the microphone capsule has been disposed interiorly in the sealing ring with the sound-sensitive surface immediately beneath the surface layer with which the sealing ring is provided. In technical terms, this construction functions satisfactorily.

EP-A-0 465 971 discloses a combination of a head-protective helmet and a voice communication system. The combination has an ear cup with a bone microphone and a speaker. The ear cup includes a suitable rigid outer shell and a suitable plastic foam ring residing interiorly of and suitably secured to the inner surface of the outer shell. The plastic foam ring provides insulation and impact absorbing mounting for the bone conduction microphone and speaker discloses a combination protective helmet and a communication system, which includes an ear cup, where a speaker and a microphone are mounted in the ear cup. The construction includes several discrete parts which are connected by leads, contacts, etc.

Ear cups or headsets of the type under consideration here are often used for lengthy periods of time. This implies that the interior of the ear cup, and above all the scaling ring, becomes dirty often because of the sweat secreted by the wearer. For this reason, so-called hygienic inserts have been created which int. al. include the sealing ring and which must be replaced at regular intervals if a satisfactory level of hygiene in the ear cup is to be maintained.

In the prior art construction, it has also been necessary, in conjunction with replacement of the hygienic insert, to replace the microphone capsule, since this is disposed interiorly in the material of the sealing ring. This entails overly high costs in connection with the replacement of a hygienic insert.

### PROBLEM STRUCTURE

The present invention has for its object to obviate the drawbacks inherent in the prior art technology. In particular the present invention has for its object to realise an ear cup or headset with a bone conduction microphone where the bone conduction microphone does not need to be replaced in connection with replacement of the hygienic insert. Further, the present invention has for its object to realise an car cup or headset which, despite the employment of a bone conduction microphone, is simple in manufacture and which makes for simple replacement of the hygienic insert.

### SOLUTION

The objects forming the basis of the present invention will be attained if the ear cup or headset mentioned by way of introduction is characterised in that the microphone capsule is disposed in a retainer body with an anchorage portion for anchorage interiorly in the car cup, where in the retainer body and the anchorage portion are of one piece of manufacture.

### BRIEF DESCRIPTION OF THE ACCOMPANYING DRAWINGS

The present invention will now be described in greater detail hereinbelow with reference to the accompanying Drawings. In the accompanying Drawings:
- Fig. 1: shows an empty ear cup without sealing ring, but with a retainer body with anchorage portion mounted therein;
- Fig. 2: shows the ear cup according to Fig. 1, now provided with fittings and sealing ring, with the retainer body in a position of use; and
- Fig. 3: is a cross section through the sealing ring taken along the section marking in Fig. 2.

### DESCRIPTION OF PREFERRED EMBODIMENT

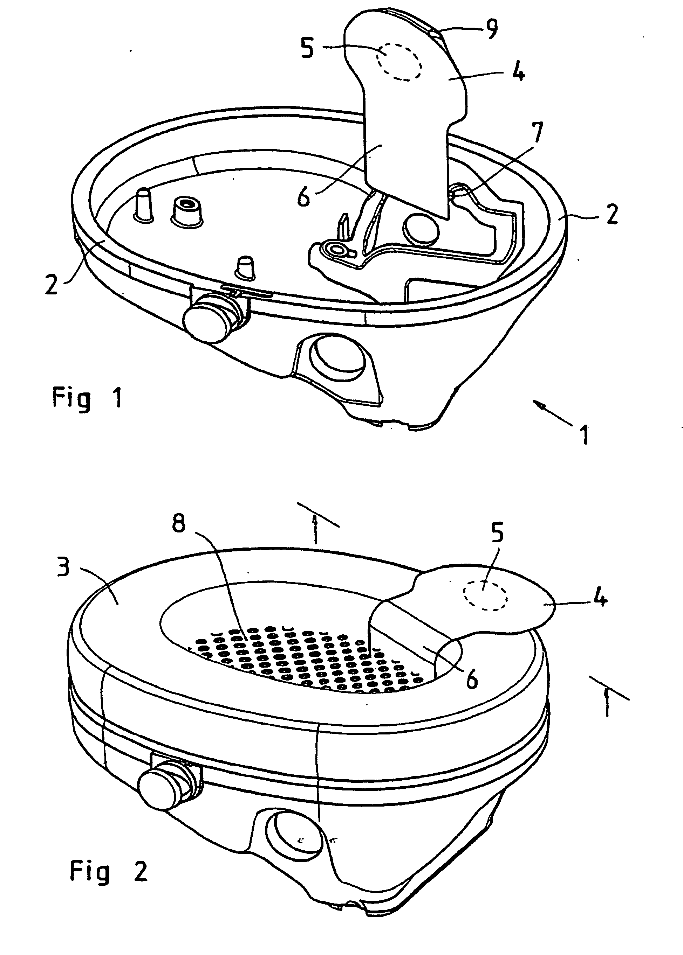

Fig, 1 shows an empty ear cup 1 included in a complete car cup unit or headset. The ear cup 1 is as a rule manufactured from plastic and has interiorly a number of parts for the securing of electronics, absorbents and the like. The ear cup 1 has an edge 2 which is designed for securing a sealing ring 3 (see Fig. 2). Thus far, the ear cup 1 as described in the foregoing is to be considered as fully conventional. This entails, on the one hand, that the sealing ring may readily be replaced in conjunction with the replacement of hygienic insert and, on the other hand, that the sealing ring 3 consists of a core of elastically yieldable material, as a rule a foamed material, and an outer casing or envelope which encloses the elastic foamed material. On use of the ear cup, this is held pressed against the head of the wearer and around the wearer's ears, so that satisfactory sealing is obtained between the sealing ring and the wearer's head.

It is also conceivable that the sealing ring 3 includes a liquid or a gel.

It will be apparent from Fig. 1 that, interiorly in the ear cup 1, there is secured a retainer body 4 for a microphone capsule 5 intimated by broken lines. The retainer body 4 has an anchorage portion 6 which, at its lower end in Fig. 1, has an angled projection 7 directed away from the observer of the Drawing and by means of which the retainer body and the anchorage portion are secured interiorly in the ear cup 1.

The retainer body 4, the anchorage portion 6 and the projection 7 are of one piece manufacture from an elastically flexible material, for example rubber. The anchorage portion 6 is of a thickness which makes it readily flexible from the straight upright position illustrated in Fig. 1 to the position of use illustrated in Fig. 2 where the one side of the retainer body 4 abuts against the scaling ring and its other side abuts against the wearer's head.

Alternatively, the anchorage portion 6 may, already at manufacture, be of a configuration which entails that the retainer body 4 assumes its position of use and thus abuts against the sealing ring 3, hence as shown in Fig. 2. On replacement of hygienic insert, the anchorage portion 6 is, in this alternative, bent to the position illustrated in Fig. 1.

It will readily be perceived that, with the retainer body 4 and the anchorage portion 6 in the position illustrated in Fig. 1, the sealing ring 3 may easily be replaced, if required. In addition, there is ready access to those parts as are disposed interiorly in the ear cup, for example the absorbent 8 illustrated in Fig. 2. The hygienic insert mentioned by way of introduction includes at least the sealing ring 3 and preferably also the absorbent 8.

It should be emphasised that, with the practical application of the present invention, it is sufficient if the sealing ring 3 is of economical, easily replaceable standard type. The side of the retainer body 4 and anchorage portion 6 facing towards the observer of Fig. 1 is, in the position according to Fig.1, substantially planar. This implies that, in the position of use according to Fig. 2, the retainer body 4 displays a substantially planar surface for abutment and sealing against the wearer's head immediately in front of the wearer's ear. However, in this position of use, the anchorage portion 6 is bent, as is clearly apparent from Fig. 2.

It will be at least partly apparent from Fig. 1 that the retainer body 4 has, in this Figure, an arched rear surface 9 which, in the position of use according to Fig. 2, is intended to abut against the sealing ring 3 and be wholly or partly impressed therein under the action of the forces that are generated when the complete ear cup or headset is worn on the wearer's head and where, for instance, it is held in position with the aid of a crown strap or the like. Other alternatives are also conceivable. Thus, the ear cups may have a neck strap or be secured in or on a helmet. How the ear cups are held against the head of the wearer is immaterial to the present invention as long as the correct abutment pressure and correct positioning can be ensured.

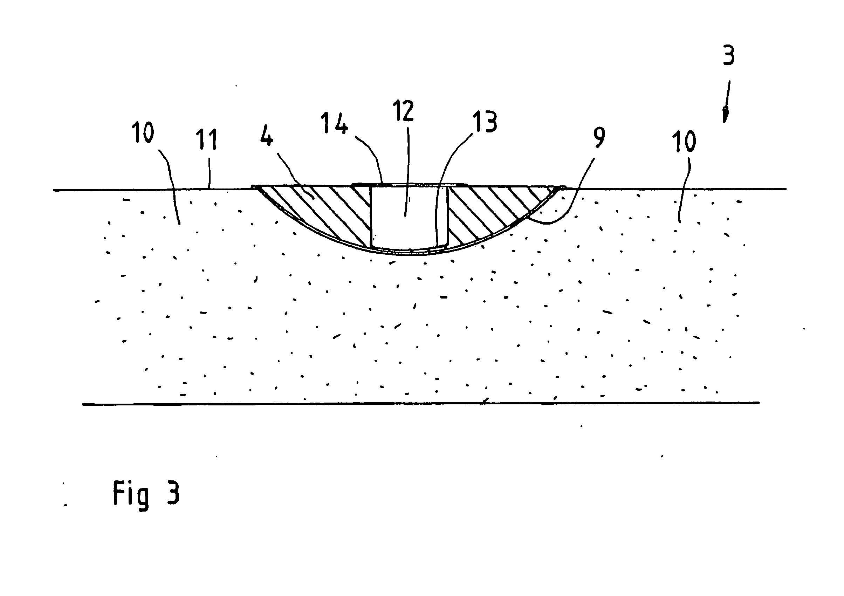

It will be clearly apparent from Fig. 3 that the arched surface 9 of the retainer body 4 which is the rear surface in Fig.1 is wholly impressed in the sealing ring 3. This entails that, in the transitional zone between the retainer body 4 and the sealing ring 3, a completely satisfactory can be attained so that the sound damping effect of the ear cup is thereby not jeopardised.

In a traditional manner, the sealing ring 3 has a filling of an elastically deformable foamed material 10 and a foil-thin outer casing or envelope 11 which is readily flexible.

The retainer body 4 has a recess 12 in which the microphone capsule 5 is disposed. The recess 12 has a bottom wall 13 which, in the position of use, is turned to face towards the sealing ring 3 and which consists of a thin, readily flexible material, as a rule rubber, since the retainer body 4 can suitably be manufactured from this material in its entirety. The recess 12 and the microphone capsule 5 are, in a direction in towards the user's head, covered by a thin partition 14 which consists of a readily flexible, possibly elastic material. The depth of the recess 12 is adapted in such a manner that the microphone capsule exactly has room between the partition 14 and the bottom wall 13. This implies that, when the retainer body 4 is impressed into the sealing 3, as shown in Fig. 3, forces created by an elastic compression of the foamed material 10 of the sealing ring 3 will, via the bottom wall 13, press the microphone capsule against the partition 14 and this latter against the user's head. As a result, a good sound conduction will be attained from the user's head via the partition to the microphone capsule 5.

According to the present invention, the distance between the partition 14 and the bottom wall 13 may be greater than the extent of the microphone capsule in the same direction. In this alternative, use is made in the recess 12 of a spacer element which fills out the remaining space in the recess 12. This spacer element guarantees that the microphone capsule will have the correct abutment pressure or conduct the sound from the user's head to the microphone capsule. The spacer element may consist of felt, a foamed material or rubber.

It should be emphasised that the microphone capsule 5 is completely separate and discrete from hard or rigid components in the ear cup and is only affected by the above-mentioned forces created by the elasticity of the foamed material.

In order to realise good sealing between the retainer body 4 and the sealing ring 3, it is important that the arched, rear surface 9 of the retainer body in a direction out towards the periphery of the retainer body gradually merges into a thin edge portion which affords fully satisfactory sealing against the sealing ring 3 when the retainer body is impressed therein. In other words, the retainer body 4 has a configuration which implies that it is attenuated outwards in a direction towards the periphery so as not to form any stepped transition in the joint to the sealing ring 3.

It will be apparent from Fig. 3 that the recess 12, and thereby also the microphone capsule, is disposed in a central region of the retainer body 4, i.e. in that area where the thickness of the retainer body is at its greatest.

## Claims

1. An ear cup with a bone conduction microphone, comprising:
an ear cup (1);
a sealing ring (3) secured to the ear cup (1);
a microphone capsule (5) adapted to be disposed between the sealing ring (3) and a wearer's head when the ear cup (1) is worn, **characterized in that** the microphone capsule (5) is disposed in a retainer body (4) with an anchorage portion (6) for anchorage interiorly in the ear cap, wherein the retainer body (4) and the anchorage portion (6) are of one piece of manufacture.

2. The ear cup of claim 1. wherein the sealing ring (3) is replaceable.

3. The ear cup of any of claims 1 to 2, wherein the microphone capsule (5) is pressed at least partly into the sealing ring (3) when the ear cup (1) is worn and is pressed against a wearer's head.

4. The ear cup of any of claims 1 to 3, wherein the microphone capsule (5) is separate from any rigid components in the ear cup (1).

5. The ear cup of any of claim 4, wherein the anchorage portion (6) is secured interiorly the ear cup (1).

6. The ear cup of claims 1 to 5, wherein the retainer body (4) further comprises a recess (12), wherein the microphone capsule (5) is disposed in the recess (12).

7. The ear cup of any of claims 1 to 6, wherein the retainer body (4) is made from an elastically flexible material.

8. The ear cup of any of claims 1 to 7, wherein the sealing ring comprises a core and an outer casing, wherein the core includes a foamed material.

9. The ear cup of any of claims 1 to 8, wherein the sealing ring (3) is removably secured to the ear cup (1).

10. The ear cup of any of claims 1 to 9, further comprising a second ear cup and at least one of a crown strap, a neck strap, or a helmet, wherein the ear cup and the second ear cup are disposed on at least one of a crown strap, a neck strap, or a helmet.

## Patentansprüche

1. Ohrmuschel mit einem Knochenleitungsmikrofon, aufweisend:
eine Ohrmuschel (1);
einen Dichtungsring (3), der an der Ohrmuschel (1) befestigt ist;
eine Mikrofonkapsel (5), die so ausgelegt ist, dass sie zwischen dem Dichtungsring (3) und dem Kopf eines Trägers angeordnet ist, wenn die Ohrmuschel (1) getragen wird, **dadurch gekennzeichnet, dass** die Mikrofonkapsel (5) in einem Rückhaltekörper (4) mit einem Verankerungsabschnitt (6) zur Verankerung innerhalb der Ohrmuschel angeordnet ist, wobei der Rückhaltekörper (4) und der Verankerungsabschnitt (6) aus einem Fertigungsstück sind.

2. Ohrmuschel nach Anspruch 1, wobei der Dichtungsring (3) auswechselbar ist.

3. Ohrmuschel nach einem der Ansprüche 1 bis 2, wobei die Mikrofonkapsel (5) wenigstens teilweise in den Dichtungsring (3) gedrückt ist, wenn die Ohrmuschel (1) getragen wird, und gegen den Kopf eines Trägers gedrückt ist.

4. Ohrmuschel nach einem der Ansprüche 1 bis 3, wobei die Mikrofonkapsel (5) von jeglichen starren Komponenten in der Ohrmuschel (1) getrennt ist.

5. Ohrmuschel nach Anspruch 4, wobei der Verankerungsabschnitt (6) innerhalb der Ohrmuschel (1) befestigt ist.

6. Ohrmuschel nach Anspruch 1 bis 5, wobei der Rückhaltekörper (4) ferner eine Aussparung (12) aufweist, wobei die Mikrofonkapsel (5) in der Aussparung (12) angeordnet ist.

7. Ohrmuschel nach einem der Ansprüche 1 bis 6, wobei der Rückhaltekörper (4) aus einem elastisch flexiblen Material hergestellt ist.

8. Ohrmuschel nach einem der Ansprüche 1 bis 7, wobei der Dichtungsring einen Kern und ein äußeres Gehäuse aufweist, wobei der Kern ein geschäumtes Material enthält.

9. Ohrmuschel nach einem der Ansprüche 1 bis 8, wobei der Dichtungsring (3) entfernbar an der Ohrmuschel (1) befestigt ist.

10. Ohrmuschel nach einem der Ansprüche 1 bis 9, ferner aufweisend eine zweite Ohrmuschel und ein Kopfband, ein Halsband und/oder einen Helm, wobei die Ohrmuschel und die zweite Ohrmuschel auf einem Kopfband, einem Halsband und/oder einem Helm angeordnet sind.

## Revendications

1. Oreillette comprenant un microphone à conduction osseuse, comprenant :
une oreillette (1) ;
une bague d'étanchéité (3) fixée à l'oreillette (1) ;
une capsule de microphone (5) prévue pour être disposée entre la bague d'étanchéité (3) et la tête d'une personne portant l'oreillette (1), **caractérisée en ce que** la capsule de microphone (5) est disposée dans un corps de retenue (4) muni d'une portion d'ancrage (6) pour l'ancrage à l'intérieur de l'oreillette, le corps de retenue (4) et la portion d'ancrage (6) étant fabriqués d'une seule pièce.

2. Oreillette selon la revendication 1, dans laquelle la bague d'étanchéité (3) est remplaçable.

3. Oreillette selon la revendication 1 ou 2, dans laquelle la capsule de microphone (5) est pressée au moins en partie dans la bague d'étanchéité (3) lorsque l'oreillette (1) est pressée contre la tête d'une personne qui la porte.

4. Oreillette selon l'une quelconque des revendications 1 à 3, dans laquelle la capsule de microphone (5) est séparée de tout composant rigide dans l'oreillette (1).

5. Oreillette selon la revendication 4, dans laquelle la portion d'ancrage (6) est fixée à l'intérieur de l'oreillette (1).

6. Oreillette selon l'une quelconque des revendications 1 à 5, dans laquelle le corps de retenue (4) comprend en outre un retrait (12), la capsule de microphone (5) étant disposée dans le retrait (12).

7. Oreillette selon l'une quelconque des revendications 1 à 6, dans laquelle le corps de retenue (4) est fabriqué en un matériau élastiquement flexible.

8. Oreillette selon l'une quelconque des revendications 1 à 7, dans lequel la bague d'étanchéité comprend un coeur et une enveloppe extérieure, le coeur comprenant un matériau moussé.

9. Oreillette selon l'une quelconque des revendications 1 à 8, dans laquelle la bague d'étanchéité (3) est fixée de manière amovible à l'oreillette (1).

10. Oreillette selon l'une quelconque des revendications 1 à 9, comprenant en outre une deuxième oreillette et au moins une sangle pour la tête, une sangle pour le cou, ou un casque, l'oreillette et la deuxième oreillette étant disposées sur au moins une sangle de tête, une sangle de cou, ou un casque.
